# EUROPEAN PATENT SPECIFICATION

(11) **EP 1 668 848 B1**
(45) Date of publication and mention of the grant of the patent: **20.07.2011**
(21) Application number: 04785311.4
(22) Date of filing: 30.09.2004
(51) Int. Cl.: H04L 12/56

(54) **DISTRIBUTED SOFTWARE ARCHITECTURE FOR IMPLEMENTING THE BGP PROTOCOL IN A ROUTER**
VERTEILTE SOFTWARE-ARCHITEKTUR ZUR IMPLEMENTIERUNG DES BGP PROTOKOLLS IN EINEM ROUTER
ARCHITECTURE LOGICIELLE REPARTIE POUR L'IMPLEMENTATION DU PROTOCOLE BGP DANS UN ROUTEUR

(30) Priority: 02.10.2003 US 677797
(43) Date of publication of application: 14.06.2006
(73) Proprietor: Cisco Technology, Inc., San Jose, CA 95134-1706 (US)
(72) Inventor: BALL, David Alexander, Harpenden, Herts. AL5 5NB (GB); BENNETT, Eric R., Ann Arbor, MI 48105 (US); HESKETH, Martin, St. Albans, Hertfordshire AL4 8TL (GB); SCUDDER, John Galen, Ann Arbor, MI 48103 (US); WARD, David D., Somerset, WI 54025 (US)
(74) Representative: Kazi, Ilya
(86) International application number: PCT/US2004/032144
(87) International publication number: WO 2005/036838

(56) References cited:
- US-A1- 2002 021 675
- US-A1- 2003 174 653
- US-B1- 6 553 423

## Description

### FIELD OF THE INVENTION

The invention relates generally to routing protocols used in computer networks and, more particularly, to an efficient and scalable implementation of a routing protocol.

### BACKGROUND OF THE INVENTION

A computer network is a geographically distributed collection of interconnected communication links used to transport data between nodes, such as computers. Many types of computer networks are available, with the types ranging from local area networks (LANs) to wide area networks (WANs). The nodes typically communicate by exchanging discrete packets or messages of data according to pre-defined protocols. In this context, a protocol consists of a set of rules defining how the nodes interact with each other.

Computer networks may be further interconnected by an intermediate node, such as a router, to extend the effective "size" of each network. Since management of a large system of interconnected computer networks can prove burdensome, smaller groups of computer networks may be maintained as routing domains or autonomous systems. The networks within an autonomous system are typically coupled together by conventional "intradomain" routers. Yet it still may be desirable to increase the number of nodes capable of exchanging data; in this case, *interdomain* routers executing interdomain routing protocols are used to interconnect nodes of the various autonomous systems.

An example of an interdomain routing protocol is the Border Gateway Protocol version 4 (BGP), which performs routing between autonomous systems by exchanging routing and reachability information among neighboring interdomain routers of the systems. An adjacency is a relationship formed between selected neighboring (peer) routers for the purpose of exchanging routing information messages and abstracting the network topology. Before transmitting such messages, however, the peers cooperate to establish a logical "peer" connection (session) between the routers. BGP generally operates over a reliable transport protocol, such as the Transmission Control Protocol (TCP), to establish a TCP connection/session.

The routing information exchanged by BGP peer routers typically includes destination address prefixes, i.e., the portions of destination addresses used by the routing protocol to render routing ("next hop") decisions. Examples of such destination ad- dresses include Internet Protocol (IP) version 4 (IPv4) and version 6 (IPv6) addresses. The BGP routing protocol is well known and described in detail in Request For Comments (RFC) 1771, by Y. Rekhter and T. Li (1995), Internet Draft <draft-ietf idr-bgp4-20. txt> titled, A Border Gateway Protocol 4 (BGP-4) by Y. Rekhter and T. Li (April 2003) and Interconnections, Bridges and Routers, by R. Perlman, published by Addison Wesley Publishing Company, at pages 323-329 (1992).

The interdomain routers configured to execute an implementation of the BGP protocol, referred to herein as BGP routers, perform various routing functions, including transmitting and receiving routing messages and rendering routing decisions based on routing metrics. Each BGP router maintains a routing table that lists all feasible paths to a particular network. Periodic refreshing of the routing table is generally not performed; however, BGP peer routers residing in the autonomous systems exchange routing information under certain circumstances. For example, when a BGP router initially connects to the network, the peer routers exchange the entire contents of their routing tables. Thereafter when changes occur to those contents, the routers exchange only those portions of their routing tables that change in order to update their peers' tables. These update messages are thus incremental update messages sent in response to changes to the contents of the routing tables and advertise only a best path to a particular network.

Broadly stated, a BGP router generates routing update messages for an adjacency or peer router by walking-through" the routing table and applying appropriate routing policies. A routing policy is information that enables a BGP router to rank routes according to filtering and preference (i.e., the "best route"). Routing updates provided by the update messages allow BGP routers of the autonomous systems to construct a consistent view of the network topology. The update messages are typically sent using a reliable transport, such as TCP, to ensure reliable delivery. TCP is a transport protocol implemented by a transport layer of the IP architecture; the term *TCP*/*IP* is commonly used to denote this architecture. The TCP/IP architecture is well known and described in Computer Networks, 3rd Edition, by Andrew S. Tanenbaum, published by Prentice-Hall (1996).

A common implementation of the BGP protocol is embodied as a single process executing on a single processor, e.g., a central processing unit (CPU), of the BGP router, while another known implementation provides multiple instances of the BGP process running on a single CPU. In this latter implementation, each BGP instance has its own routing table and chooses its own best path for a given prefix. From the perspective of the protocol, each BGP instance is a separate router; yet, each router instance shares the same resources, e.g., the single CPU. Both BGP implementations store and process update messages received from their peer routers, and create and process update messages for transmission (advertisement) to those peers. However, the amount of processing time (i.e., bandwidth) available on the single CPU is finite which, in turn, results in limitations on the number of routes the BGP implementations can handle and limitations on the number of peers/adjacencies that the BGP implementations can support.

Examples of factors that limit the number of adjacencies and routes that a BGP implementation can support include the physical amount of memory in the BGP router. A router typically employs a 32-bit CPU that enables support of, at most, 4Gigabytes (GB) of memory. The amount of memory the BGP router can support is important because secondary storage, such as disks, cannot be efficiently used to store update messages given the substantial read/write latencies involved with accessing the disks. Moreover, each adjacency maintained by the router has a certain minimum CPU cost associated therewith. Examples of such cost include sending "KeepAlive" messages at predetermined intervals, processing received update messages, and deciding whether to send update messages to peers whenever a change is made to the routing table.

In general, it is desirable to increase the number of peers a BGP implementation can support. Yet as the number of peers increases, the amount and quantity of processing increases correspondingly. In addition, convergence time increases as the number of routing peers increases. As used herein, the convergence time is the time needed for a BGP router to receive and process update messages from all its routing peers, select best paths for each prefix included in those messages, install those best paths into the routing table and advertise those best paths back to its routing peers via update messages. As a result, CPU, memory and even communication scaling becomes an issue with the BGP implementation.

One solution to the scaling issue is to provide a BGP implementation that spans a plurality of routers, wherein each router includes a processor that maintains a subset of the supported peers. Such a multi-processor implementation has a fundamental limitation that, from the point of view of a peer, each processor resembles a separate router. This results in a cognitive and operational model wherein the multiple routers interact separately instead of functioning as a single router to the network. The multiple-router model is operationally more complex than a single router; that is, it is easier and more cost effective, from an operational cost point of view, to operate a single router than it is to configure a plurality of routers to interoperate.

Accordingly, there is a need to provide additional CPU bandwidth to a BGP implementation that enables scaling to support larger numbers of peers and routes, with- out incurring similar increases in convergence time. The present invention is directed to an architecture that enables scaling of a BGP implementation to allow support of such additional peers and routes.

US-Al-2002/0021675 describes a system and method of extracting relevant information from a collection of router configuration files and using the information to populate a data model.

### SUMMARY OF THE INVENTION

Aspects of the invention are set out in the independent claims and preferred features are set out in the dependent claims.

The present invention overcomes the disadvantages of the prior art by providing a distributed software architecture that implements a routing protocol as a set of processes running on a set of processors of a router. The distributed processes cooperate in a manner that internally exploits the distributed set of processors, yet externally presents an appearance/behaviour of a single routing protocol process communicating with its peers in the network. The distributed nature of the architecture is achieved without altering the fundamental routing protocol, but by apportioning certain functions/tasks of the protocol among various processes in the multiprocessor router.

In the illustrative embodiment, the routing protocol is the Border Gateway Protocol version 4 (BGP). A BGP implementation of the distributed software architecture comprises multiple processes including BGP speakers, each of which is responsible for managing a set of routing peers, and a BGP Routing Information Base ("bRIB"). The BGP speakers are responsible for the majority of processing costs in the BGP implementation. The use of multiple BGP speakers provides a substantial scaling feature of the invention by enabling cost effective processing of tasks, such as packet reception, packet transmission and packet formatting.

Each BGP speaker preferably executes on a different processor and is generally responsible for, among other things, handling (terminating) one or more BGP peering connections, receiving and storing routes from each peer, and applying inbound policy to the routes received from each peer. Each BGP speaker is also responsible for downloading all routes received from its peers (except those "filtered" by policy) to the bRIB, which preferably executes on a processor different from that executing a speaker. The bRIB performs a first stage of route selection to compute a set of best routes from among the routes downloaded from all of the BGP speakers of the router and, thereafter, downloads each route selected as the best route to another process, i.e., the global RIB, which performs a second (and final) stage of route selection. The bRIB also sends the computed best routes to each BGP speaker, which applies outbound policy (per peer) to those routes prior to sending them to the peers.

Advantageously, the inventive architecture allows the workload of the distributed software implementation to be apportioned among multiple processes, effecting a more scalable BGP implementation capable of allowing a user the ability to dedicate resources to particular groups of peers, while maintaining the external appearance of a single BGP protocol instance. As noted, the BGP implementation may be further apportioned among several processors in a multiprocessor router, such that the total required processing is distributed among the processors, instead of concentrated on a single processor. As the number of routing peers increases, additional processors can be added to the router to handle the extra processing required, thereby avoiding overloading of a single processor and, hence, adversely affecting the convergence time of the protocol.

A secondary advantage of the invention is improved fault-tolerance. If a particular processor running a BGP speaker in the router fails, only the routing peers assigned to that speaker are affected. If the failing processor is running the bRIB process, no peers are affected and the router can recover simply by having each speaker resend all of its paths to the bRIB when it restarts. In the absence of the inventive distributed architecture, a failure to the processor running the concentrated BGP implementation would affect all peers of that implementation.

A tertiary advantage of the invention is that groups of peers can be co-located on given processors, separate from peers on the other processors, to effect feature, separation or resource isolation. Furthermore, the inventive architecture maintains the autonomy of the peers, such that each peer can be configured ("placed") in a speaker arbitrarily, with the actual placement policy being determined by the user. For example, the user could place all peers exchanging routes for IPv4 on one processor, while peers exchanging routes for IPv6 could be placed on a different processor. Churn in the topology of a network will only slightly impact another network, effectively isolating the delivery of each service from perturbations in the churned network.

### BRIEF DESCRIPTION OF THE DRAWINGS

The above and further advantages of the invention may be better understood by referring to the following description in conjunction with the accompanying drawings in which like reference numbers indicate identical or functionally similar elements:
Fig. 1 is a schematic block diagram of a computer network comprising a plurality of autonomous systems interconnected by intermediate nodes, such as Border Gateway Protocol (BGP) interdomain routers;
Fig. 2 is a schematic block diagram of an embodiment of an interdomain router that may be advantageously used with the present invention;
Fig. 3 is a schematic block diagram of a conventional protocol stack, such as the Internet communications protocol stack, within the interdomain router of Fig. 2;
Fig. 4 is a schematic block diagram of an update message, such as a Border Gateway Protocol (BGP) update message that may be advantageously used with the present invention;
Fig. 5 is a schematic block diagram of a path attributes field of the BGP update message that may be advantageously used with the present invention;
Fig. 6 is a schematic block diagram illustrating the architecture of the BGP protocol;
Fig. 7 is a schematic block diagram illustrating a BGP implementation of a distributed software architecture according to the present invention;
Fig. 8 is a schematic block diagram of a routing table having a plurality of routing table entries; and
Fig. 9 is a flowchart illustrating a sequence of steps pertaining to data flow through the BGP implementation of the distributed software architecture according to the present invention.

### DETAILED DESCRIPTION OF AN ILLUSTRATIVE EMBODIMENT

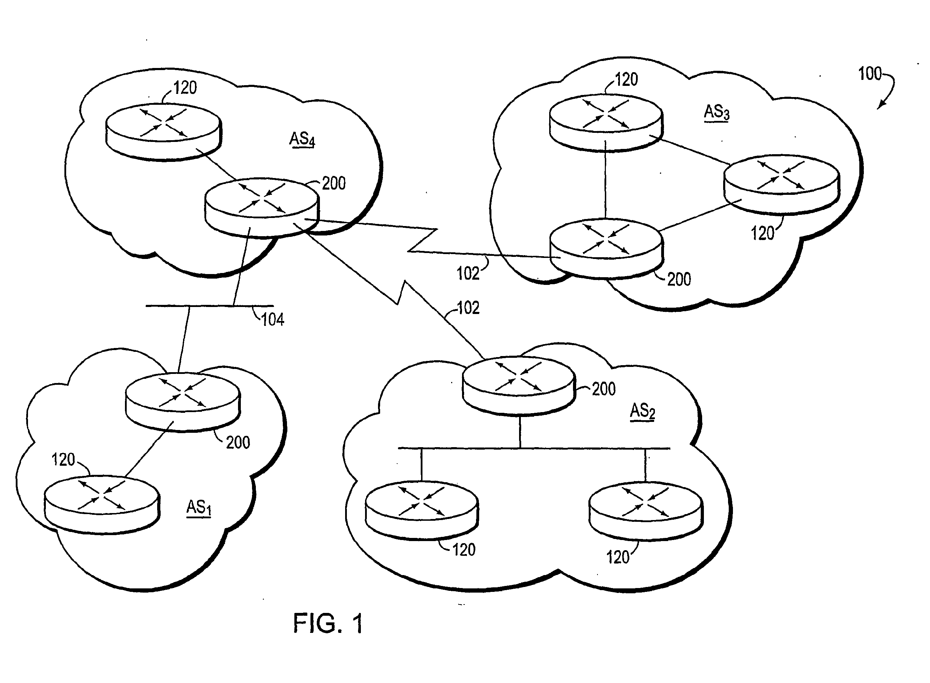

Fig. 1 is a schematic block diagram of a computer network 100 comprising a plurality of routing domains or autonomous systems interconnected by intermediate nodes, such as conventional intradomain routers 120 and interdomain routers 200. The autonomous systems may include various routing domains (AS₁₋₄) interconnected by the interdomain routers. The interdomain routers 200 are further interconnected by shared medium networks, such as local area networks (LANs) 104, and point-to-point links 102, such as frame relay links, asynchronous transfer mode links or other serial links. Communication among the routers is typically effected by exchanging discrete data packets or messages in accordance with pre-defined protocols, such as the Transmission Control Protocol/Internet Protocol (TCP/IP). It will be understood to those skilled in the art that other protocols, such as the Internet Packet Exchange (IPX) protocol, may be advantageously used with the present invention.

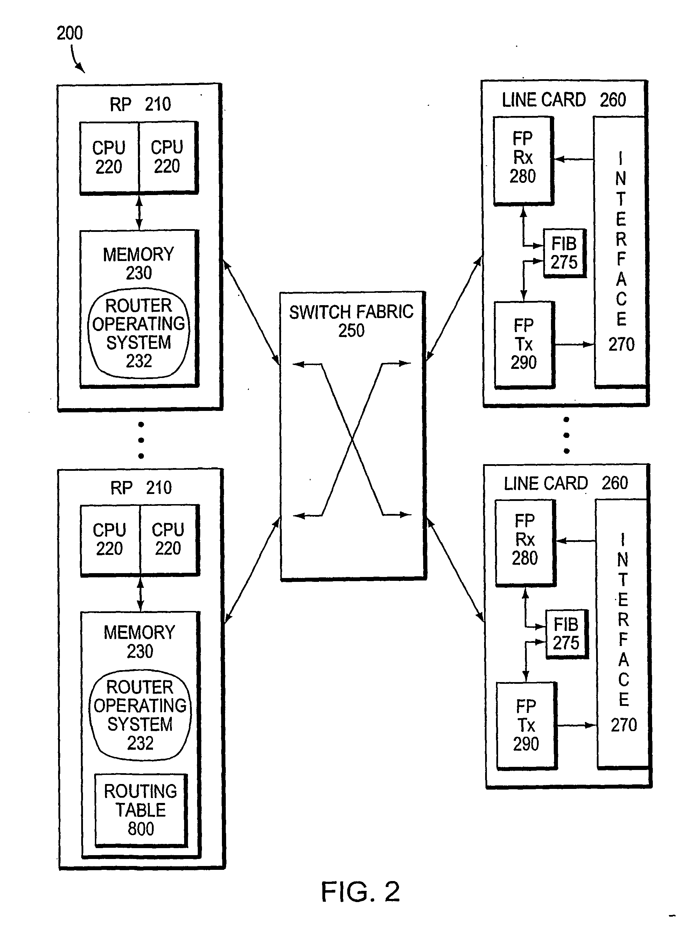

Fig. 2 is a schematic block diagram of an interdomain router 200 that may be advantageously used with the present invention. The interdomain router 200 comprises a plurality of loosely coupled processors 210 connected to a plurality of ingress and egress line cards (line cards 260) via a high-speed switch fabric 250 such as, e.g., a crossbar interconnection or high-speed bus. Those skilled in the art will recognize that other router platforms such as, e.g., a plurality of independent nodes interconnected as a multi-node cluster, could be used in accordance with the invention. In this context, the term "node" denotes a chassis adapted to hold a plurality of modules, including processors and line cards.

The processors 210 are illustratively route processors (RPs), each having a dedicated memory 230. The memory 230 may comprise storage locations addressable by the processor for storing software programs and data structures associated with the inventive distributed routing protocol architecture. The processor 210 may comprise processing elements or logic for executing the software programs and manipulating the data structures. A router operating system 232, portions of which are typically resident in memory 230 and executed by the processor, functionally organizes the router by, *inter alia,* invoking network operations in support of software processes (described herein) executing on the processor. It will be apparent to those skilled in the art that other processor and memory means, including various computer readable media, may be used for storing and executing program instructions pertaining to the inventive architecture described herein.

In the illustrative embodiment, each RP 210 comprises two central processing units (CPUs 220), e.g., Power-PC 7460 chips, configured as a symmetric multiprocessing (SMP) pair. The CPU SMP pair is adapted to run a single copy of the router operating system 232 and access its memory space 230. As noted, each RP has a memory space that is separate from the other RPs in the router 200. The processors communicate using an interprocess communication (IPC) mechanism. In addition, each line card 260 comprises an interface 270 having a plurality of ports coupled to a receive forwarding processor (FP Rx 280) and a transmit forwarding processor (FP Tx 290). The FP Rx 280 renders a forwarding decision for each packet received at the router on interface 270 of an ingress line card in order to determine to which RP 210 to forward the packet. To that end, the FP Rx renders the forwarding decision using an internal forwarding information base, IFIB, of a FIB 275. Likewise, the FP Tx 290 performs lookup operations (using FIB 275) on a packet transmitted from the router via interface 270 of an egress line card.

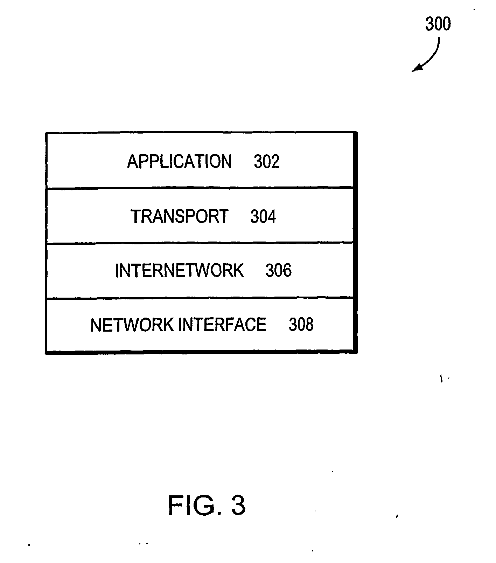

A key function of the interdomain router 200 is determining the next node to which a packet is sent; in order to accomplish such "routing" the interdomain routers cooperate to determine best paths through the computer network 100. The routing function is preferably performed by an internetwork layer of a conventional protocol stack within each router. Fig. 3 is a schematic block diagram of a conventional network protocol stack, such as the Internet communications protocol stack 300. The architecture of the Internet protocol stack is represented by 4 layers termed, in ascending interfacing order, the network interface layer 308, the internetwork layer 306, the transport layer 304 and the application layer 302.

The lower network interface layer 308 is generally standardized and implemented in hardware and firmware, whereas the higher layers are typically implemented in the form of software. The primary internetwork layer protocol of the Internet architecture is the IP protocol. IP is primarily a connectionless protocol that provides for internetwork routing, fragmentation and reassembly of exchanged packets - generally referred to as "datagrams" in an Internet environment - and which relies on transport protocols for end-to-end reliability. An example of such a transport protocol is the TCP protocol, which is implemented by the transport layer 304 and provides connection oriented services to the upper layer protocols of the Internet architecture. The term *TCP*/*IP* is commonly used to denote the Internet architecture.

In particular, the internetwork layer 306 concerns the protocol and algorithms that interdomain routers utilize so that they can cooperate to calculate paths through the computer network 100. An interdomain routing protocol, such as the Border Gateway Protocol version 4 (BGP), is used to perform interdomain routing (for the internetwork layer) through the computer network. The interdomain routers 200 (hereinafter "peer routers") exchange routing and reachability information among the autonomous systems over a reliable transport layer connection, such as TCP. An adjacency is a relationship formed between selected peer routers for the purpose of exchanging routing messages and abstracting the network topology. The BGP protocol uses the TCP transport layer 304 to ensure reliable communication of routing messages among the peer routers.

In order to perform routing operations in accordance with the BGP protocol, each interdomain router 200 maintains a routing table 800 that lists all feasible paths to a particular network. The routers further exchange routing information using routing update messages 400 when their routing tables change. The routing update messages are generated by an updating router to advertise best paths to each of its neighboring peer routers throughout the computer network. These routing updates allow the BGP routers of the autonomous systems to construct a consistent and up-to-date view of the network topology.

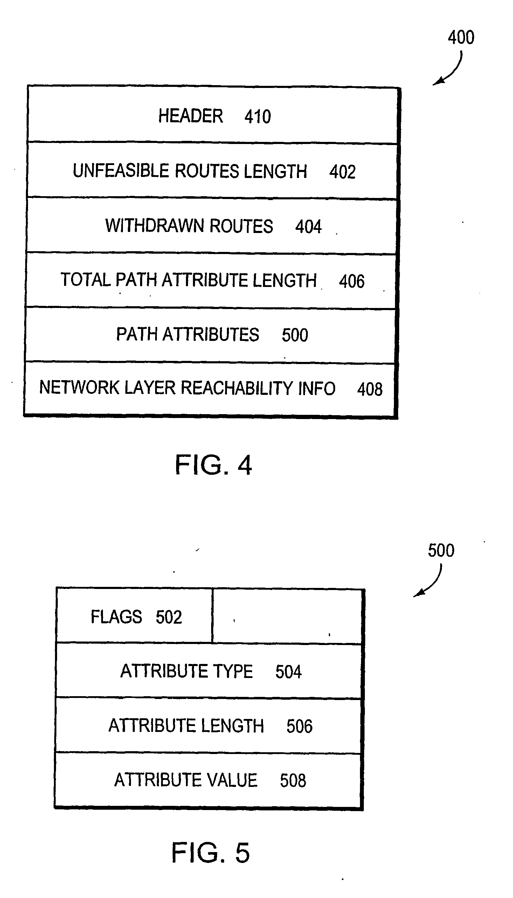

Fig. 4 is a schematic block diagram of a conventional BGP update message 400 comprising a plurality of fields appended to a header 410. An unfeasible routes length field 402 indicates the total length of a withdrawn routes field 404, which illustratively contains a list of IP address prefixes for the routes being withdrawn from service. A total path attribute length field 406 indicates the total length of a path attributes field 500 and a network layer reachability information field 408 illustratively contains a list of IP (IPv4 or IPv6) address prefixes. Note that the combination of a set of path attributes and a prefix is referred to as a "route"; the terms "route" and "path" may be used interchangeably herein. The format and function of the update message 400 is described in *RFC 1771* and *Interconnections, Bridges and Routers.*

Specifically, the path attributes field 500 comprises a sequence of fields, each describing a path attribute in the form of a triple (i.e., attribute type, attribute length, attribute value). Fig. 5 is a schematic block diagram of the path attributes field 500 comprising a plurality of subfields including a flags subfield 502, an attribute type subfield 504, an attribute length subfield 506 and an attribute value subfield 508. In particular, the attribute type subfield 504 specifies a plurality of attribute type codes, examples of which include an autonomous system (AS) path, a multi-exit discriminator (MED) code and a communities attribute, which is a set of opaque 32-bit tags that can apply to a route. The MED is an optional non-transitive attribute having a value that may be used by an updating BGP router's decision algorithm to discriminate among multiple exit points to a neighboring autonomous system, as described further herein. Note that the path attributes are derived from a combination of configuration and protocol (i.e., propagated from the BGP protocol) information.

### BGP Architecture

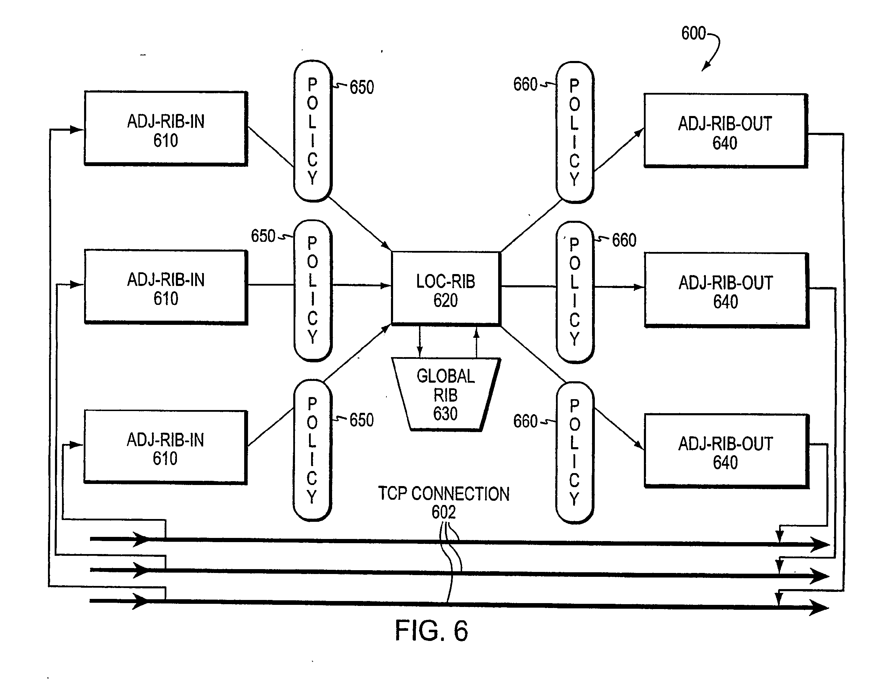

Fig. 6 is a schematic block diagram illustrating the architecture of the BGP protocol. Peers announce routing updates via TCP connections 602. The BGP protocol "listens" for routing update messages 400 and stores all learned routes for each connection in a BGP database. The BGP database is illustratively organized as Adjacency RIB In (Adj-RIB-In 610), Adjacency RIB Out (Adj-RIB-Out 640) and local RIB (loc-RIB 620). Each peer/TCP connection 602 is associated with an Adj-RIB-In 610 and an Adj-RIB-Out 640. Note that this association is a conceptual data construct; there is typically not a separate Adj-RIB-In/-Out database for each peer.

The BGP protocol runs inbound policy on all routes "learned" for each connection 602 and those routes that match are stored in an Adj-RIB-In 610 unique to that connection. Additional inbound policy 650 (filtering) is then applied to those stored routes, with a potentially modified route being installed in the loc-RIB 620. The loc-RIB 620 is generally responsible for selecting the best route per prefix from the union of all policy-modified Adj-RIB-In routes, resulting in routes referred to as "best paths". The set of best paths is then installed in the global RIB 630, where they may contend with routes from other protocols to become the "optimal" path ultimately selected for forwarding. Thereafter, the set of best paths have outbound policy 660 run on them, the result of which is placed in appropriate Adj-RIB-Outs 640 and announced to the respective peers via the same TCP connections 602 from which routing update messages 400 were learned.

Many of the functions or tasks performed within the BGP protocol are performed on distinct subsets of routing data, independently from one another. These tasks include (1) tracking the state of each peer according to the BGP Finite State Machine (FSM), described in *draft-ietf idr-bgp4-20.txt (Section 8),* and responding to FSM events, (2) parsing update messages 400 received from each peer and placing them in an Adj-RIB-In 610 for that peer (*Section* 3), and (3) applying inbound policy 650 for the peer to filter or modify the received updates in the Adj-RIB-In. The BGP implementation also (4) calculates the best path for each prefix in the set of Adj-RIB-Ins and places those best paths in the loc-RIB 620 *(Section 9).* As the number of peers increases, the number of paths per-prefix also increases and, hence, this calculation becomes more complex. Additional tasks performed by the BGP implementation include (5) applying outbound policy 660 for each peer on all the selected paths in the loc-RIB to filter or modify those paths, and placing the filtered and modified paths in an Adj-RIB-Out 640 for that peer, as well as (6) formatting and sending update messages 400 to each peer based on the routes in the Adj-RIB-Out for that peer.

Tasks (1), (2), and (3) are defined per peer and operate on routing data learned only from that peer. Performing any of these tasks for a given peer is done independently of performing the same task for any other peers. Task (4) examines all paths from all peers, in order to insert them into the loc-RIB and determine the best path for each prefix. Tasks (5) and (6), like tasks (1), (2) and (3), are defined per peer. While both tasks (5) and (6) must access the set of best paths determined in task (4), they generate routing data for each peer independently of all of the other peers. Thus, the autonomy of each subset of the data and the tasks performed on them lend themselves to distribution across processes or threads in an n-way SMP router, or across nodes in a cluster, so long as each task has access to the required data. The required data includes (i) inbound routes from the peer for tasks (1), (2) and (3); (ii) all paths in all the Adj-RIBs-Ins for task (4); and (iii) a set of best paths for tasks (5) and (6).

According to the present invention, a distributed software architecture is provided that implements a routing protocol, such as BGP, as a set of processes running on a set of processors of a router. The distributed processes cooperate in a manner that internally exploits the distributed set of processors, yet externally presents an appearance/behavior of a single routing protocol process communicating with its peers in the network. The distributed nature of the architecture is achieved without altering the fundamental BGP routing protocol, but by apportioning certain functions/tasks of the protocol among various processes in the multiprocessor router.

### BGP Implementation of Distributed Software Architecture

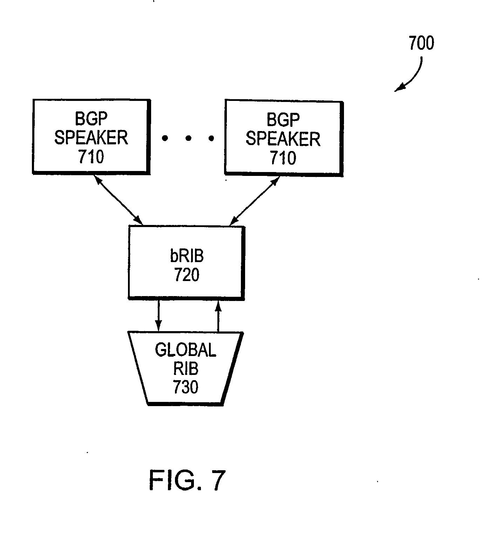

Fig. 7 is a schematic block diagram illustrating a BGP implementation 700 of the distributed software architecture according to the present invention. The distributed BGP implementation comprises multiple processes including one or more BGP speaker processes 710, each of which is responsible for managing a set of routing peers, and a BGP Routing Information Base ("bRIB") process 720. The BGP speakers 710 are responsible for the majority of processing costs in the BGP implementation. The use of multiple BGP speakers provides a substantial scaling feature of the invention by enabling cost effective processing of tasks, such as packet reception, packet transmission and packet formatting. Each BGP speaker is generally responsible for, among other things, handling (terminating) one or more BGP peering connections, receiving and storing routes from each peer, and applying inbound policy to the routes received from each peer.

Specifically, each BGP speaker (i) establishes and maintains a reliable TCP connection to each routing peer and handles FSM events for the peer, (ii) receives and processes update messages 400 received from the peers, places the paths in the Adj-RIB-In 610 and applies inbound policy 650, (iii) sends all paths in the Adj-RIBs-In 650 to the bRIB 720, and (iv) receives a best path for each prefix from the bRIB 720 and advertises it to each routing peer after applying outbound policy 660 for that peer. In the distributed software architecture, policy computations are preferably handled by a separate software component, e.g., a library, to which the BGP speaker "binds", although these computations could alternately be implemented "in-line" as part of the BGP code. Each BGP speaker 710 is illustratively a multithreaded process; policy is thus preferably handled as a library function call initiated by one of the BGP speaker threads. As such, policy computations occur within the BGP process space.

Policy may be used to limit the reception or distribution of routing information from and to a BGP speaker (i.e., a form of access control or filtering) and to manipulate the data in the routing information. Examples of routing policy include "match if prefix is 10/8" or "match if prefix starts with 192.168 and AS path starts with 690". One or both of these policies may be applied to filtering on a peering session in an inbound fashion, such that the BGP speaker only accepts those routes that match the policy. Policy can also apply to filtering in an outbound fashion, such that only routes that match one of the policies are sent to the peers. Moreover, policy may be used for "go or no-go" decisions on whether to pass a route and to manipulate the route. For example, assume a policy "if the route contains AS number 1800, then add community 42 to the route". This manipulates the data comprising the route according to the policy control.

Several processors 210 may be used to run the speakers 710, wherein each processor runs entirely independently of the other processors. The reason for distributing functions, such as policy, to the BGP speaker 710 as opposed to handling it in the bRIB 720 is that executing the policy code is one of the most expensive operations in the entire BGP protocol. As noted, there is only one bRIB 720 in the distributed software architecture, but potentially many speakers 710. By distributing the policy code function/task to the speakers, that task can be apportioned into many smaller subtasks and the collective strength of the multiple processors may be applied to execute the code. In addition, each BGP speaker is illustratively assigned many routing peers (e.g., 1000) to manage and every routing peer configured on the router is assigned to one speaker. Therefore, as the number of BGP routing peers increases, extra processors can be added to the router to handle the extra processing needed.

Each BGP speaker 710 is responsible for downloading all routes received from its peers (except those "filtered" by policy) to the bRIB 720, as described further herein. The bRIB is illustratively a process executing on a processor (RP 210) of the BGP router 200 that may be separate from those processors functioning as speakers; alternatively, the bRIB may share a processor with one of the speakers. It will be understood to those of skill in the art that other implementations are contemplated by the invention, including implementations wherein more than two (or all) processes of the distributed BGP architecture run on the same processor.

The bRIB process 720 (i) receives and stores routes received from each speaker process, (ii) performs a first stage of route selection to compute a set of best routes from among the routes (prefixes) downloaded from all of the BGP speakers, (iii) installs the best routes/paths into a "local" routing table (i.e., loc-RIB 620) and (iv) sends the computed best paths back to all the speakers 710 so that they can be advertised to their routing peers. It should be noted that the speakers must not announce the routes they learn from the bRIB back to the bRIB. Moreover, since all paths in all Adj-RIBs-Ins 610 are sent to the bRIB 720, the correct best path for each network is selected by the bRIB, according to the BGP protocol standard.

The global RIB 730 illustratively maintains a "system" routing table for the router. The system routing table ("routing table 800") is a database that contains routing information used to construct a forwarding table of the FIB 275 used by the FPs of the router 200 when performing forwarding decisions on packets. The routing table 800 typically denotes a database containing all available routes, including ones that have been selected for forwarding (optimal paths) as well as backup routes that are not currently selected for forwarding, while the forwarding table denotes those optimal best paths that have actually been selected for forwarding.

The loc-RIB 620 denotes a table storing routes that are similar to the routes in the forwarding table. The bRIB 720 maintains the loc-RIB 620, including processing and downloading to the global RIB 730 each route/path in the loc-RIB selected as the best path. The global RIB 730 maintains a copy of those downloaded best paths, along with other paths/routes downloaded from other routing protocols, in order to compute a set of optimal best paths/routes for installation in the routing table 800. The global RIB 730 preferably interacts with another software component to download those optimal routes to all the line cards 260 of the router 200, each of which maintains its own copy as a forwarding table.

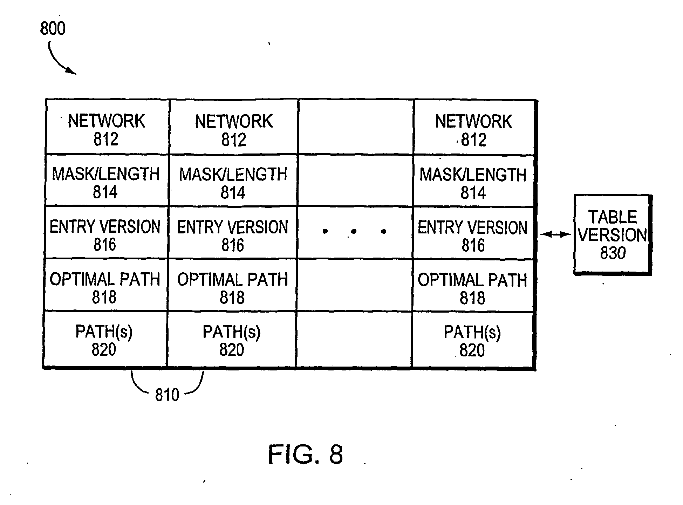

Fig. 8 is a schematic block diagram of a routing table 800 comprising a plurality of route entries 810, each of which includes a plurality of fields. Specifically, route entry 810 includes a network field 812 containing a network portion of an IP address identifying a network, a mask/length field 814 containing a mask for differentiating between the network portion of the IP address and a host portion, and an entry version number field 816 containing a version number of the entry. A path field 820 contains one or more paths, wherein each path describes the "next hop" address or interface 270 of the peer or other path attributes 500 of routes in the computer network, while an optimal path field 818 contains the optimal best path from among the paths described in field 820 based on pre-specified route selection criteria.

The routing table 800 further includes a table version number 830 that is used to indicate a version (level) of the routing table. The table version number 830 is incremented each time there is a change to the routing table 800. The entry version number 816 is used for incremental update operations. Thus, each time there is a change to an entry 810, such as when the entry is added or deleted or when there is a best path change, the table version number 830 is incremented and the entry version number 816 is set to that incremented value.

In the illustrative embodiment, the distributed BGP software architecture is organized such that each BGP speaker process 710 executes on a different RP. In addition, the bRIB process 720 executes on an RP 210 separate from an RP executing a BGP speaker 710, to thereby avoid contention between the bRIB and speaker for similar resources. Illustratively, the bRIB 720 executes on the same RP 210 as the global RIB 730, but this is not a requirement and those processes could execute on different RPs. However, when configuring the bRIB 720 to execute on the same RP as the global RIB 730, the performance of the router increases because the processes communicate, e.g., with respect to route selection, via message exchanges that occur faster on the same RP 210 rather than across the switch fabric 250. It will be understood to those skilled in the art that alternative configurations are contemplated, including allowing all processes to run on the same RP 210, as well as allowing the bRIB and global RIB to be the same process.

As noted, the BGP processes of the distributed software architecture cooperate in a manner that externally presents an appearance/behaviour of a single routing protocol process despite having those processes run on various RPs 210 of the router. To make the distributed RPs appear as a single-processor BGP, a local packet transport service is used to distribute TCP sessions to the RPs, even TCP sessions with identical destination IP addresses. Thus, from the perspective of an "outsider", all RPs share the same IP address or addresses. This is different from the typical way of dealing with a collection of processors/routers, where each would have its own unique IP address. An example of a local packet transport service that may be advantageously used with the present invention is described in U. S. Patent Application No. 20 020 293 180, titled System and Method for Local Packet Transport Services within Distributed Routers, filed on November 12,2002.

### Route Selection

Route selection, as described herein, utilizes a distance vector (Bellman-Ford) algorithm or, more specifically, a BGP best path selection (path vector) algorithm. According to the BGP standard, every BGP router announces to all of its peers the routes it uses for its own forwarding. As a result of these announcements, a particular router may gather from its peers two or more routes for some networks. For example, the router may have learned two or more different ways to reach network 10.1.1.0/24; the best path selection computation is a way of choosing one of those routes as "best" and using it to render forwarding decisions for the router. Note that in the case of multipath BGP, more than one path may be chosen as best by the algorithm. However, it should be further noted that these multiple chosen paths are only downloaded to the global RIB and there is only ever one best path for each prefix sent back to the speakers.

Broadly stated, the illustrative BGP best path selection algorithm comprises the following steps:
1. Prefer the path with the largest WEIGHT; note that WEIGHT is a locally specified parameter, i.e., local to the router on which it is configured;
2. Prefer the path with the largest LOCAL_PREF;
3. Prefer the path that was locally originated via a network or aggregate BGP subcommand, or through redistribution from an interior gateway protocol (IGP);
4. Prefer the path with the shortest AS_PATH;
5. Prefer the path with the lowest origin type, e.g., IGP is lower than exterior gateway protocol (EGP), and EGP is lower than INCOMPLETE;
6. Prefer the path with the lowest MED among routes with identical AS;
7. Prefer external (eBGP) over internal (iBGP) paths;
8. Prefer the path with the lowest IGP metric to the BGP next hop;
9. Prefer the route coming from the BGP router with the lowest router ID (BGP identifier);
10. If the originator or router ID is the same for multiple paths, prefer the path with the minimum cluster ID length; and
11. Prefer the path coming from the lowest neighbor (peer) address.

It should be noted that the full best path computation is preferably performed where the router has fast access to all paths for a given prefix; thus, in the illustrative embodiment, the full BGP best path selection algorithm is performed in the bRIB 720. The loc-RIB 620 conceptually comprises the output of the BGP selection algorithm, i.e., the bRIB 720 and loc-RIB 620 are not quite identical. The bRIB 720 contains all routes downloaded by the speakers that are considered for selection into the loc-RIB 610; the bRIB then performs the first stage of route selection.

Once the bRIB computes the loc-RIB 620, the next function in the route selection procedure is to generate the forwarding tables of FIB 275 for the line cards 260. The bRIB abstracts the best paths/routes of the loc-RIB and downloads them to the global RIB 730. Since there are protocols other than BGP running on the router 200, the global RIB gathers abstracted routes from other routing protocols, e.g., OSPF and IS-IS routes, as well as locally configured routes and static routes, and performs a second (and final) stage of route selection to compute a set of optimal best paths for all routing protocols executing on the router. For example, the global RIB 730 examines a BGP best path/route and determines whether it is the only route for a particular destination; if so, the global RIB selects that route as an optimal best path. However, if there are final best paths to a destination offered from both BGP and, e.g., OSPF, (a "conflict") the global RIB must select one.

Specifically, the global RIB 730 selects optimal best paths from among various protocols where there may be conflicts between the outputs of the different protocols. By examining the route selection outputs from the different protocols, the global RIB 730 is the final arbiter of which routes get selected as optimal paths to destinations. Routes with different destinations are never in conflict, so the problem arises when there are two or more routes that have the same destination. For example, assume there is a route from OSPF for 10/8 and a route from BGP for 10/8; the global RIB must then select one for installation in the routing table 800. The criteria that the global RIB 730 may apply to determine which route to install may be, e.g., always use OSPF over BGP. Once the global RIB has rendered its conflict resolution, it essentially selects routes for installation in the FIB. Other software components in the router then download the routes from the global RIB into the FIB 275 of the line cards 260.

When generating update messages 400 to send to its peers, each BGP speaker 710 may apply policy configured for redistribution of routes from other protocols into BGP; redistribution of routes occurs by the global RIB 730 uploading (communicating) those optimal best paths into the bRIB 720. For example, redistribution may occur from OSPF into BGP, which means all active OSPF optimal best paths (those that have made it into the global RIB) are copied into the BGP routing table (i.e., the loc-RIB 620). These redistributed protocol routes do not supersede those routes in the loc-RIB, but rather augment them to essentially factor into the BGP best path selection algorithm. Note that the best paths in the loc-RIB that have been downloaded to the global RIB are not thereafter uploaded back to the bRIB. Moreover, if a redistributed path is selected as the best path by the bRIB and installed into the loc-RIB 620, it is not then downloaded to the global RIB (since that is where it came from originally).

The bRIB 720 transmits a copy of the loc-RIB 620 to each BGP speaker 710, which performs outbound policy operations on those loc-RIB best paths/routes. As a result of the policy operations, the speaker computes a subset of routes for the Adj-RIB-Out 640 for a peer router. The BGP speaker then creates one or more BGP update messages 400 based on internal data representations of the routes in the Adj-RIB-Out 640 and transmits those update messages to the peer. As noted, the BGP protocol is an incremental protocol in that the update messages are incremental. Despite having an Adj-RIB-Out 640 with many (e.g., a million) routes, only routes that have changed (including withdrawn) are included in the update messages. The BGP speaker 710 may also perform some kind of manipulation/change to the data before transmitting it in the update messages 400. Once created, the BGP updates messages are passed to the TCP layer and other lower layers of the network protocol stack, where the messages are formatted and transmitted over the communication links as packets to the peer routers.

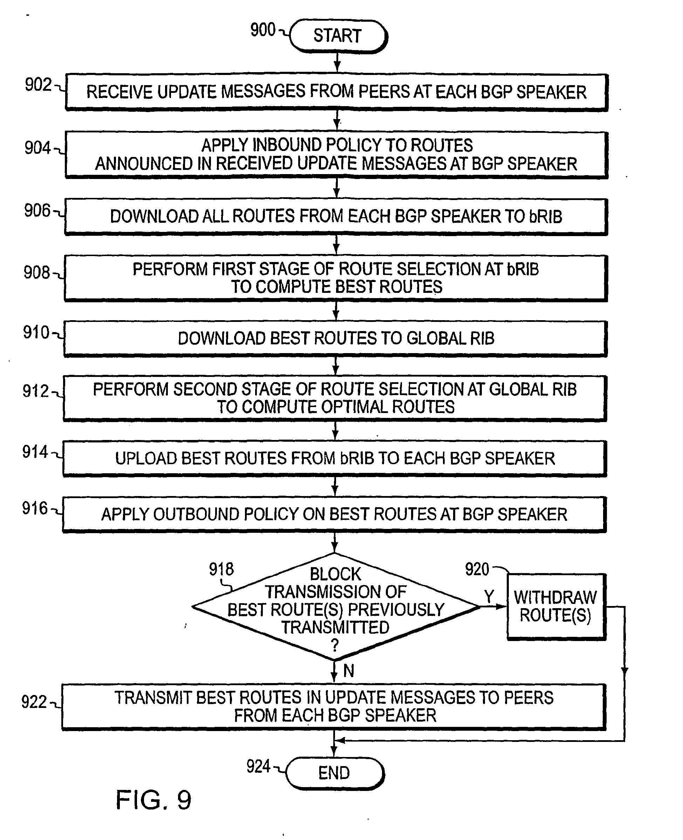

Fig. 9 is a flowchart illustrating a sequence of steps pertaining to data flow throughout the BGP implementation of the distributed software architecture according to the present invention. Data flow in the BGP implementation 700 occurs in response to update messages 400 received at and transmitted from the router 200. These update messages are, in turn, used in connection with route selection in the router. The sequence starts at Step 900 and proceeds to Step 902 where each BGP speaker receives update messages 400 from its peers and, in Step 904, processes those received messages by applying inbound policy to the routes announced in those messages. The speaker then downloads all routes received from its peers (except those "filtered" by policy) to the bRIB 720 in Step 906.

The bRIB, in turn, examines all the routes that it receives from the various BGP speakers and, in Step 908, performs a first stage of route selection to compute a set of best paths/routes. In Step 910, the bRIB 720 downloads those best routes to the global RIB 730 for the router which, in Step 912, performs a second (and final) stage of route selection to compute optimal best path routes. In Step 914, the bRIB uploads the best routes for each prefix to each BGP speaker. In Step 916, the BGP speaker 710 performs further processing by applying outbound policy on those best routes and, in Step 918, determines whether the applied policy blocks transmission of one or more routes that had been previously transmitted. If so, those routes are withdrawn from service using the withdrawn routes field 404 of update message 400 (Step 920). Otherwise, the speaker transmits (advertises) the best routes to its peers as update messages in Step 922 and the sequence ends at Step 924.

The distributed software architecture described herein overcomes conventional CPU and memory constraints to provide a scalable routing protocol mechanism. The architecture also exploits the frequency of update message processing by distributing the routing protocol functions across processing resources of the router. Because the computer network 100 is not entirely stable, each event that alters the network topology (e.g., a communication link or segment going offline) is transformed into a BGP update message 400 that a BGP router 200 receives and may need to transmit. There is an average frequency of update messages that the protocol must handle and that translates into a CPU load. A BGP distributed implementation that operates within its scaling envelope is, on average, able to process update messages substantially as soon as they are received to thereby keep the data flow moving through the router.

As for scalability and convergence, there is a certain amount of extra latency that is incurred by going to the distributed architecture because of the IPC mechanism. This latency is "traded off" for total volume supported by the router. On the convergence spectrum, minimum average latency (as opposed to minimum latency) is a goal. Since all speakers 710 provide all (filtered) routes to the bRIB 720, the distributed architecture is asynchronous and eventually converges to the same correct state depending on timing issues.

Advantageously, the inventive architecture allows the workload of the distributed software implementation to be apportioned among multiple processes, effecting a more scalable BGP implementation capable of allowing a user the ability to dedicate resources to particular groups of peers, while maintaining the external appearance of a single BGP protocol instance. As noted, the BGP implementation may be further apportioned among several processors in a multiprocessor router (or nodes in a multi-node cluster), such that the total required processing is distributed among the processors, instead of concentrated on a single processor. As the number of routing peers increases, additional processors can be added to the router to handle the extra processing required, thereby avoiding overloading of a single processor and, hence, adversely affecting the convergence time of the protocol.

A secondary advantage of the invention is improved fault-tolerance. If a particular processor running a BGP speaker in the router fails, only the routing peers assigned to that speaker are affected. If the failing processor is running the bRIB process, no peers are affected and the router can recover simply by having each speaker resend all of its paths to the bRIB when it restarts. In the absence of the inventive distributed architecture, a failure to the processor running the concentrated BGP implementation would affect all peers of that implementation.

A tertiary advantage of the invention is that groups of peers can be co-located on given processors, separate from peers on the other processors, to effect feature separation or resource isolation. Furthermore, the inventive architecture maintains the autonomy of the peers, such that each peer can be configured ("placed") in a speaker arbitrarily, with the actual placement policy being determined by the user. For example, the user could place all peers exchanging routes for IPv4 on one processor, while peers exchanging routes for IPv6 could be placed on a different processor. Chum in the topology of a network will only slightly impact another network, effectively isolating the delivery of each service from perturbations in the churned network.

In sum, the inventive architecture increases the scalability (and thus performance under load) of the BGP routing protocol, while simultaneously making the protocol more fault-tolerant. Because the invention is directed to performance of a BGP implementation with a large number of peers, it has the greatest applicability to large service providers; however, the invention is not intrinsically limited to that space.

The foregoing description has been directed to specific embodiments of this invention. It will be apparent, however, that other variations and modifications may be made to the described embodiments, with the attainment of some or all of their advantages. For instance, it is expressly contemplated that the teachings of this invention, including the various processes described herein, can be implemented as software, including a computer-readable medium having program instructions executing on a computer, hardware, firmware, or a combination thereof. In addition, it is understood that the data structures described herein can include additional information while remaining within the scope of the present invention. Furthermore, the inventive distributed software architecture may apply generally to distance vector routing protocols, e.g., IGRP, EIGRP or RIP, as well as to a label distribution protocol (LDP). Accordingly this description is to be taken only by way of example and not to otherwise limit the scope of the invention. Therefore, it is the object of the appended claims to cover all such variations and modifications as come within the scope of the claims.

## Claims

1. A system for implementing a distributed software architecture configured to implement a routing protocol in a router (200) of a computer network, the system comprising:
a plurality of processors (210);
a switch fabric (250) interconnecting the processors; and
a plurality of processes each process running on a respective processor (210), the processes including two or more speakers (710) and a protocol routing information base, RIB, (720), each speaker configured to operate independently to
(i) handle one or more connections to peer routers of the router,
(ii) receive and store routes from those peer routers,
(iii) apply inbound policy to the routes received from the peer routers and
(iv) download all routes received from the peer routers, except those filtered by the inbound policy, to the protocol RIB (720), the protocol RIB configured to perform a first stage of route selection to compute a set of best routes from among the routes downloaded from all of the speakers (710) of the router.

2. The system of Claim 1 further comprising a local RIB (loc-RIB) maintained by the protocol RIB and configured to store the set of best routes computed by the protocol RIB.

3. The system of Claim 2 wherein the processes further include a global RIB (730) configured to maintain a routing table for the router.

4. The system of Claim 3 wherein the protocol RIB (720) is configured to download the set of best routes from the loc-RIB to the global RIB (730), the global RIB further configured to use the downloaded set of best routes from the loc-RIB, along with other sets of best routes downloaded from other routing protocols, to perform a second stage of route selection that computes optimal routes for installation in the routing table (800).

5. The system of Claim 4 further comprising one or more line cards (260) connected to the switch fabric (250), each line card configured to render forwarding decisions on packets received at the router (200) using a forwarding information base, FIB, (275) constructed from the optimal routes installed in the routing table.

6. The system of Claim 2 wherein the protocol RIB is further configured to upload the set of best routes to the speakers (710) to allow the speakers to advertise the best routes to the peer routers.

7. The system of Claim 6 wherein each speaker (710) is further configured to apply outbound policy to the best routes prior to advertising them to the peer routers.

8. The system of Claim 7 wherein each speaker (710) is further configured to advertise the best routes using update messages.

9. The system of Claim 8 wherein the routing protocol is a Border Gateway Protocol (BGP) and wherein the protocol RIB is a BGP RIB (bRIB).

10. The system of Claim 1 wherein the routing protocol is a distance vector routing protocol.

11. A method for implementing a routing protocol in a router (200) of a computer network as a distributed software architecture system, the method comprising the steps of:
providing a plurality of processors (210) of the router;
interconnecting the processors;
running at least two speakers (710) on at least two first processors of the plurality of processors, each speaker operating independently to:
handle one or more connections to peers of the router,
receive and storing routes from those peers (902), and
apply inbound policy to the routes received from the peers (904), and
running a protocol routing information base (RIB) on a second processor of the plurality of processors, each speaker downloading all routes received from the peers (906), except those filtered by the inbound policy, to the protocol RIB, the protocol RIB performing a first stage of route selection to compute best routes from among the routes downloaded from all of the speakers of the router (908).

12. The method of Claim 11 further comprising the steps of:
maintaining a local RIB (loc-RIB) at the protocol RIB; and
storing the best routes computed by the protocol RIB in the loc-RIB.

13. The method of Claim 12 further comprising the step of running a global RIB (730) on a third processor of the plurality of processors, the global RIB maintaining a routing table (800) for the router.

14. The method of Claim 13 wherein the second and third processors are the same processor.

15. The method of Claim 13 further comprising the steps of:
downloading the best routes from the loc-RIB to the global RIB (910);
performing a second stage of route selection at the global RIB (912) using the downloaded best routes from the loc-RIB, along with other sets of best routes downloaded from other routing protocols, the second stage of route selection computing optimal routes for installation in the routing table.

16. The method of Claim 15 further comprising the steps of:
interconnecting one or more line cards (260) to the plurality of processors;
constructing a forwarding information base, FIB (275), at each line card, the FIB constructed from the optimal routes installed in the routing table; and
rendering forwarding decisions on packets received at each line card using the FIB.

17. The method of Claim 12 further comprising the steps of:
uploading the best routes from the bRIB to each speaker (914);
applying outbound policy to the uploaded best routes (916); and
advertising resulting best routes to the peers (922).

18. A computer program or computer program product or computer readable medium containing executable program instructions for implementing a routing protocol in a router (200) of a computer network as a distributed software architecture system, comprising program instructions for performing a method according to any of claims 11 to 17.

## Patentansprüche

1. System zum Implementieren einer verteilten Softwarearchitektur, konfiguriert zum Implementieren eines Routing-Protokolls in einem Router (200) eines Computernetzwerks, wobei das System aufweist:
eine Vielzahl von Prozessoren (210);
eine Switch Fabric (250), die die Prozessoren miteinander verbindet; und
eine Vielzahl von Prozessen, wobei jeder Prozess auf einem entsprechenden Prozessor (210) abläuft, wobei die Prozesse zwei oder mehrere Lautsprecher (710) und eine Protokoll Routing Information Base, RIB (720) aufweisen, wobei jeder Lautsprecher so konfiguriert ist, dass er unabhängig arbeitet, um
(i) eine oder mehrere Verbindungen zu Partner-Routern des Routers zu bearbeiten;
(ii) Routen von diesen Partner-Routern zu empfangen und zu speichern;
(iii) Eingangsrichtlinien auf die von den Partner-Routern empfangenen Routen anzuwenden; und
(iv) alle von den Partner-Routern empfangenen Routen, mit Ausnahme derjenigen, die durch die Eingangsrichtlinien gefiltert wurden, in die Protokoll-RIB (720) herunterzuladen, wobei die Protokoll-RIB so konfiguriert ist, dass sie eine erste Phase von Routenauswahl durchführt, um einen Satz bester Routen aus den von allen Lautsprechern (710) des Routers heruntergeladenen Routen zu berechnen.

2. System nach Anspruch 1, das des Weiteren eine von der Protokoll-RIB gepflegte lokale RIB (loc-RIB) aufweist und so konfiguriert ist, dass es den Satz bester Routen, der von der Protokoll-RIB berechnet wurde, speichert.

3. System nach Anspruch 2, wobei die Prozesse des Weiteren eine globale RIB (730) aufweisen, die so konfiguriert ist, dass sie eine Routing-Tabelle für den Router pflegt.

4. System nach Anspruch 3, wobei die Protokoll-RIB (720) so konfiguriert ist, dass sie den Satz bester Routen von der loc-RIB auf die globale RIB (730) herunterlädt, wobei die globale RIB des Weiteren so konfiguriert ist, dass sie den heruntergeladenen Satz bester Routen von der loc-RIB verwendet, zusammen mit anderen Sätzen bester Routen, die von anderen Routing-Protokollen heruntergeladen wurden, um eine zweite Phase von Routen-Auswahl durchzuführen, die optimale Routen zum Einbauen in die Routingtabelle (800) berechnet.

5. System nach Anspruch 4, das des Weiteren eine oder mehrere Leitungskarten (260) aufweist, die mit der Switch Fabric (250) verbunden sind, wobei jede Leitungskarte so konfiguriert ist, dass sie Weiterleitungsentscheidungen über an dem Router (200) empfangene Pakete (200) mittels einer Forwarding Information Base, FIB, (Weiterleitungstabelle) (275) trifft, die aus den in der Routing-Tabelle enthaltenen optimalen Routen erstellt wird.

6. System nach Anspruch 2, wobei die Protokoll-RIB des Weiteren so konfiguriert ist, dass sie den Satz bester Routen an die Lautsprecher (710) hochlädt, um den Lautsprechern zu ermöglichen, die besten Routen an die Partner-Router mitzuteilen.

7. System nach Anspruch 6, wobei jeder Lautsprecher (710) des Weiteren so konfiguriert ist, dass er abgehende Richtlinien auf die besten Routen anwendet, bevor er sie an die Partner-Router mitteilt.

8. System nach Anspruch 7, wobei jeder Lautsprecher (710) des Weitem so konfiguriert ist, dass er die besten Routen mittels Aktualisierungsnachrichten mitteilt.

9. System nach Anspruch 8, wobei das Routing-Protokoll ein Border Gateway Protocol (BGP) ist, und wobei die Protokoll-RIB eine BGP-RIB (bRIB) ist.

10. System nach Anspruch 1, wobei das Routing-Protokoll ein Entfemungsvektor-Routing-Protokoll ist.

11. Verfahren zum Implementieren eines Routing-Protokolls in einem Router (200) eines Computer-Netzwerks als verteiltes Softwarearchitektursystem, wobei das Verfahren die folgenden Schritte umfasst:
Bereitstellen einer Vielzahl von Prozessoren (210) des Routers;
Verbinden der Prozessoren miteinander;
Betreiben von wenigstens zwei Lautsprechern (710) auf wenigstens zwei ersten Prozessoren der Vielzahl von Prozessoren, wobei jeder Lautsprecher unabhängig arbeitet, um
eine oder mehrere Verbindungen zu Partnern des Routers zu bearbeiten;
Routen von den Partnern zu empfangen und zu speichern (902); und
Eingangsrichtlinien auf die von den Partnern empfangenen Routen anzuwenden (904); und
Betreiben einer Protokoll Routing Information Base (RIB) auf einem zweiten Prozessor der Vielzahl von Prozessoren, wobei jeder Lautsprecher alle von den Partnern empfangenen Routen, mit Ausnahme derjenigen, die durch die Eingangsrichtlinien gefiltert wurden, in die Protokoll-RIB herunterlädt (906), wobei die Protokoll-RIB eine erste Phase von Routenauswahl durchführt, um beste Routen aus den von allen Lautsprechern des Routers heruntergeladenen Routen zu berechnen (908).

12. Verfahren nach Anspruch 11, das die folgenden Schritte umfasst:
Verwalten einer lokalen RIB (loc-RIB) an der Protokoll-RIB; und
Speichern der von der Protokoll-RIB berechneten besten Routen in der loc-RIB.

13. Verfahren nach Anspruch 12, das des Weiteren den Schritt des Laufenlassens einer globalen RIB (730) auf einem dritten Prozessor der Vielzahl von Prozessoren umfasst, wobei die globale RIB eine Routingtabelle (800) für den Router verwaltet.

14. Verfahren nach Anspruch 13, wobei die zweiten und dritten Prozessoren derselbe Prozessor sind.

15. Verfahren nach Anspruch 13, das des Weiteren die folgenden Schritte umfasst:
Herunterladen der besten Routen von der loc-RIB auf die globale RIB (910);
Durchführen einer zweiten Phase von Routenauswahl an der globalen RIB (912) mittels der von der loc-RIB heruntergeladenen besten Routen, zusammen mit anderen Sätzen von besten Routen, die von anderen Routing-Protokollen heruntergeladen wurden, wobei die zweite Phase von Routenauswahl optimale Routen zum Einbauen in die Routingtabelle berechnet.

16. Verfahren nach Anspruch 15, das des Weiteren die folgenden Schritte umfasst:
Verbinden einer oder mehrerer Leitungskarten (260) mit der Vielzahl von Prozessoren;
Erstellen einer Forwarding Information Base, FIB, (Weiterleitungstabelle) (275) an jeder Leitungskarte, wobei die FIB aus den in der Routing-Tabelle enthaltenen optimalen Routen erstellt wird; und
Treffen von Weiterleitungsentscheidungen für Pakete, die an jeder Leitungskarte empfangen wurden, mittels der FIB.

17. Verfahren nach Anspruch 12, das des Weiteren die folgenden Schritte umfasst:
Hochladen der besten Routen von der bRIB an jeden Lautsprecher (914);
Anwenden von Ausgangsrichtlinien auf die hochgeladenen besten Routen (916); und
Mitteilen der resultierenden besten Routen an die Partner (922).

18. Computerprogramm oder Computerprogrammerzeugnis oder computerlesbares Medium mit ausführbaren Programmbefehlen zum Implementieren eines Routing-Protokolls in einem Router (200) eines Computer-Netzwerks als verteiltes Softwarearchitektursystem, mit Programmbefehlen zum Durchführen eines Verfahrens nach einem der Ansprüche 11 bis 17

## Revendications

1. Système pour implémenter une architecture logicielle répartie configuré pour implémenter un protocole de routage dans un routeur (200) d'un réseau informatique, le système comprenant :
une pluralité de processeurs (210) ;
une matrice de commutation (250) interconnectant les processeurs ; et
une pluralité de procédés, chaque procédé s'exécutant sur un processeur (210) respectif, les procédés incluant deux haut-parleurs ou plus (710) et une base d'informations de routage, RIB (720) de protocole, chaque haut-parleur étant configuré pour fonctionner indépendamment pour
(i) manipuler une ou plusieurs connexions vers des routeurs par paires du routeur,
(ii) recevoir et stocker des itinéraires de ces routeurs par paires,
(iii) appliquer une politique d'entrée aux itinéraires reçus des routeurs par paires et
(iv) télécharger tous les itinéraires reçus des routeurs par paires, à l'exception de ceux filtrés par la politique d'entrée, vers la RIB de protocole (720), la RIB de protocole étant configurée pour effectuer un premier stade de sélection d'itinéraire afin de calculer un jeu de meilleurs itinéraires parmi les itinéraires téléchargés de tous les haut-parleurs (710) du routeur.

2. Système selon la revendication 1, comprenant en outre une RIB locale (RIB loc) maintenue par la RIB de protocole et configurée pour stocker le jeu de meilleurs itinéraires calculé par la RIB de protocole.

3. Système selon la revendication 2, dans lequel les procédés incluent en outre une RIB globale (730) configurée pour maintenir une table de routage pour le routeur.

4. Système selon la revendication 3, dans lequel la RIB de protocole (720) est configurée pour télécharger le jeu de meilleurs itinéraires de la RIB loc vers la RIB globale (730), la RIB globale étant en outre configurée pour utiliser le jeu de meilleurs itinéraires téléchargé de la RIB loc, ainsi que d'autres jeux de meilleurs itinéraires téléchargés d'autres protocoles de routage, pour effectuer un second stade de sélection d' itinéraire qui calcule des itinéraires optimaux pour une installation dans la table de routage (800).

5. Système selon la revendication 4, comprenant en outre une ou plusieurs cartes de lignes (260) connectées à la matrice de commutation (250), chaque carte de lignes étant configurée pour rendre des décisions d'acheminement sur des paquets reçus au niveau du routeur (200) en utilisant une base d'informations d'acheminement, FIB (275) construite à partir des itinéraires optimaux installés dans la table de routage.

6. Système selon la revendication 2, dans lequel la RIB de protocole est en outre configurée pour téléverser le jeu de meilleurs itinéraires vers les haut-parleurs (710) pour permettre aux haut-parleurs de communiquer les meilleurs itinéraires aux routeurs par paires.

7. Système selon la revendication 6, dans lequel chaque haut-parleur (710) est en outre configuré pour appliquer une politique de sortie aux meilleurs itinéraires avant de les communiquer aux routeurs par paires.

8. Système selon la revendication 7, dans lequel chaque haut-parleur (710) est en outre configuré pour communiquer les meilleurs itinéraires en utilisant des messages de mise à jour.

9. Système selon la revendication 8, dans lequel le protocole de routage est un protocole de passerelle frontalière (BGP) et dans lequel la RIB de protocole est une RIB BGP (RIBb).

10. Système selon la revendication 1, dans lequel le protocole de routage est un protocole de routage de vecteur de distance.

11. Procédé d'implémentation d'un protocole de routage dans un routeur (200) d'un réseau informatique sous la forme d'un système d'architecture logicielle répartie, le procédé comprenant les étapes consistant à :
fournir une pluralité de processeurs (210) du routeur ;
interconnecter les processeurs ;
faire fonctionner au moins deux haut-parleurs (710) sur au moins deux premiers processeurs de la pluralité de processeurs, chaque haut-parleur fonctionnant indépendamment pour :
manipuler une ou plusieurs connexions vers des paires du routeur,
recevoir et stocker des itinéraires de ces paires (902), et
appliquer une politique d'entrée aux itinéraires reçus des paires (904), et
exécuter une base d'informations de routage de protocole (RIB) sur un deuxième processeur de la pluralité de processeurs, chaque haut-parleur téléchargeant tous les itinéraires reçus des paires (906), à l'exception de ceux filtrés par la politique d'entrée, vers la RIB de protocole, la RIB de protocole effectuant un premier stade de sélection d'itinéraire pour calculer les meilleurs itinéraires parmi les itinéraires téléchargés de tous les haut-parleurs du routeur (908).

12. Procédé selon la revendication 11, comprenant en outre les étapes consistant à :
maintenir une RIB locale (RIB loc) au niveau de la RIB de protocole ; et
stocker les meilleurs itinéraires calculés par la RIB de protocole dans la RIB loc.

13. Procédé selon la revendication 12, comprenant en outre l'étape consistant à exécuter une RIB globale (730) sur un troisième processeur de la pluralité de processeurs, la RIB globale maintenant une table de routage (800) pour le routeur.

14. Procédé selon la revendication 13, dans lequel les deuxième et troisième processeurs sont le même processeur.

15. Procédé selon la revendication 13, comprenant en outre les étapes consistant à :
télécharger les meilleurs itinéraires de la RIB loc à la RIB globale (910) ;
effectuer un second stade de sélection d'itinéraire au niveau de la RIB globale (912) en utilisant les meilleurs itinéraires téléchargés de la RIB loc, ainsi que d'autres jeux de meilleurs itinéraires téléchargés à partir d'autres protocoles de routage, le second stade de sélection d'itinéraire calculant des itinéraires optimaux pour une installation dans la table de routage.

16. Procédé selon la revendication 15, comprenant en outre les étapes consistant à :
interconnecter une ou plusieurs cartes de lignes (260) à la pluralité de processeurs ;
construire une base d'informations d'acheminement, FIB (275), au niveau de chaque carte de lignes, la FIB étant construite à partir des itinéraires optimaux installés dans la table de routage ; et
rendre des décisions d'acheminement sur des paquets reçus au niveau de chaque carte de lignes en utilisant la FIB.

17. Procédé selon la revendication 12, comprenant en outre les étapes consistant à :
téléverser les meilleurs itinéraires de la RIBb vers chaque haut-parleur (914) ;
appliquer une politique de sortie aux meilleurs itinéraires téléversés (916) ; et
communiquer des meilleurs itinéraires résultants aux paires (922).

18. Programme informatique ou produit de programme informatique ou support lisible par ordinateur contenant des instructions de programme exécutable pour implémenter un protocole de routage dans un routeur (200) d'un réseau informatique sous la forme d'un système d'architecture logicielle répartie, comprenant des instructions de programme pour exécuter un procédé selon l'une quelconque des revendications 11 à 17.
